# EUROPÄISCHE PATENTSCHRIFT

(11) **EP 2 572 427 B1**
(45) Veröffentlichungstag und Bekanntmachung des Hinweises auf die Patenterteilung: **01.03.2017**
(21) Anmeldenummer: 11718289.9
(22) Anmeldetag: 21.04.2011
(51) Int. Cl.: H02J 5/00

(54) **ANORDNUNG UND VERFAHREN ZUM BETREIBEN EINER ANORDNUNG ZUR INDUKTIVEN ENERGIEÜBERTRAGUNG AN EINEN ELEKTRISCHEN VERBRAUCHER**
ASSEMBLY AND METHOD FOR OPERATING AN ASSEMBLY FOR THE INDUCTIVE ENERGY TRANSMISSION TO AN ELECTRICAL CONSUMER
DISPOSITIF ET PROCÉDÉ POUR FAIRE FONCTIONNER UN DISPOSITIF DE TRANSMISSION INDUCTIVE D'ÉNERGIE À UN RÉCEPTEUR ÉLECTRIQUE

(30) Priorität: 20.05.2010 DE 102010022122
(43) Veröffentlichungstag der Anmeldung: 27.03.2013
(60) Teilanmeldung: 13000391.6
(73) Patentinhaber: Sew-Eurodrive GmbH & Co. KG, 76646 Bruchsal (DE)
(72) Erfinder: PODBIELSKI, Leobald, 76199 Karlsruhe (DE); KUHFUSS, Valentin, 76297 Stutensee (DE); SCHMIDT, Josef, 76676 Graben-Neudorf (DE)
(74) Vertreter: Tüngler, Eberhard
(86) Internationale Anmeldenummer: PCT/EP2011/002042
(87) Internationale Veröffentlichungsnummer: WO 2011/144290

(56) Entgegenhaltungen:
- JP-A- 6 151 088
- JP-A- 2001 357 992
- US-A- 5 644 598
- US-A- 5 978 242

## Beschreibung

Die Erfindung betrifft eine Anordnung zur induktiven Energieübertragung an einen elektrischen Verbraucher.

Es ist bekannt, einen Verbraucher resonant induktiv zu versorgen.

Aus der US 5 978 242 A1 ist ein Wechselstrom/Gleichstromwandler, also AC/DC-Wandler, mit einem Leiter als Primärwicklung bekannt, mit einem resonanzkreis und einem Hochsetzsteller bekannt,

Der Erfindung liegt daher die Aufgabe zugrunde, eine Anordnung zum Betreiben einer Anordnung zur induktiven Energieübertragung an einen elektrischen Verbraucher weiterzubilden, wobei der Wirkungsgrad verbessert werden soll, insbesondere im Dauerbetrieb und unter wechselhaften Einflüssen und Belastungen.

Erfindungsgemäß wird die Aufgabe bei der Anordnung nach den in Anspruch 1 angegebenen Merkmalen gelöst.

Wichtige Merkmale der Erfindung bei der Anordnung zur induktiven Energieübertragung an einen elektrischen Verbraucher sind, dass eine Sekundärwicklung induktiv gekoppelt ist mit einem Primärleiter,
wobei zur Bildung eines Schwingkreises der Sekundärwicklung eine Anordnung von Kapazitäten zugeschaltet ist,
wobei aus dem Schwingkreis eine Hochsetzstelleranordnung mit Gleichrichteranordnung versorgt ist, deren Ausgangsspannung einen Verbraucher speist.

Von Vorteil ist dabei, dass die für den Verbraucher bereit stellbare Spannung hochsetzbar ist und daher die Sekundärwicklung nur eine geringe Anzahl von Windungen aufweisen darf. Somit sind die in und an der Sekundärwicklung auftretenden Spannungen, insbesondere die einzelnen, zwischen Windungen der Sekundärwicklung auftretenden Spannungen klein haltbar, so dass keine aufwendige Isolierung notwendig ist.

Bei einer vorteilhaften Ausgestaltung weist die Hochsetzstelleranordnung einen Spartransformator auf, dessen Eingangsstrom, insbesondere primärseitig, mittels eines Schalters AC-S1 steuerbar, insbesondere getaktet betrieben, ist. Von Vorteil ist dabei, dass mittels der Veränderung der Taktung eine davon abhängig verschieden hohe Ausgangsspannung erzeugbar ist. Insbesondere ist bei einer pulsweitenmodulierten Ansteuerung die Pulsweite und/oder Pulsweitenmodulationsfrequenz steuerbar und somit eine entsprechende Ausgangsspannung erzeugbar.

Bei einer vorteilhaften Ausgestaltung wird die Ausgangsseite des Spartransformators, insbesondere dessen Sekundärseite, einer Gleichrichteranordnung zugeführt. Von Vorteil ist dabei, dass ausgangsseitig eine unipolare Spannung, insbesondere Gleichspannung, dem Verbraucher bereit stellbar ist.

Bei einer vorteilhaften Ausgestaltung ist aus dem Schwingkreis die Eingangsseite eines Spartransformators versorgt, dessen Ausgangsseite einen Gleichrichter versorgt, aus dem über Mittel zur Glättung ein Verbraucher versorgbar ist. Von Vorteil ist dabei, dass eine geglättete Spannung zur Verfügung stellbar ist, wobei die Mittel zur Glättung derart ausführbar sind, insbesondere als Reihenschaltung zweier oder mehrerer Kapazitäten, dass mittels eines Schalters eine Verbindung zwischen den Mitteln und dem Gleichrichter herstellbar ist, dass eine spannungserhöhende Wirkung erzielbar ist, insbesondere eine Spannungsverdopplung durch Umschalten zwischen Spitzenwertgleichrichtung und Spitze-Spitzenwertgleichrichtung.

Bei einer vorteilhaften Ausgestaltung ist der Eingangsseite des Spartransformators ein steuerbarer Schalter parallel oder in Reihe zugeschaltet, so dass mittels getakteter Ansteuerung dieses Schalters die Ausgangsspannung auf einen Sollwert hin regelbar ist, insbesondere wobei das Ansteuersignal, insbesondere dessen Frequenz und/oder Pulsweitenmodulationsverhältnis, Stellgröße eines Reglers ist, dem der erfasste Ausgangsspannungswert als Istwert zugeführt wird. Von Vorteil ist dabei, dass bei parallel Schalten ein Kurzschließen des Eingangs ausführbar ist, insbesondere bei Versorgung aus einem Reihenschwingkreis, und bei in Reihe Schalten ein Auftrennen des Eingangs, insbesondere bei Versorgung aus einem Parallelschwingkreis.

Bei einer vorteilhaften Ausgestaltung ist die Gleichrichteranordnung zwischen einer Spitzenwertgleichrichtung und einer Spitze-Spitzenwertgleichrichtung umschaltbar, insbesondere also eine Spannungsdopplerschaltung aufweist. Von Vorteil ist dabei, dass eine spannungserhöhende oder sogar spannungsverdoppelnde Wirkung erzielbar ist. Durch getaktetes Betreiben des umschaltenden Mittels, insbesondere Schalters, ist auch ein Regeln der Spannung auf einen Sollwert hin ermöglicht.

Bei einer vorteilhaften Ausgestaltung weist die Gleichrichteranordnung einen Halbbrückengleichrichter auf. Von Vorteil ist dabei, dass eine besonders einfache Gleichrichtung mit hohem Wirkungsgrad ausführbar ist.

Bei einer vorteilhaften Ausgestaltung sind der Gleichrichteranordnung ausgangsseitig eine Reihenschaltung von Kapazitäten zugeschaltet sind, insbesondere parallel zugeschaltet sind, wobei ein Schalter derart zwischen einer Halbbrücke der Gleichrichteranordnung und einem Verbindungsknoten zwischen den Kapazitäten angeordnet ist, dass eine Beeinflussung der Ausgangsspannung mittels der Schalterstellung dieses Schalters erreichbar ist. Von Vorteil ist dabei, dass ein Umschalten zur Spannungserhöhung ausführbar ist. Mittels getaktetem Betreiben bei geeigneter Dimensionierung der Mittel zum Glätten der Ausgangsspannung ist sogar ein Hinregeln der Ausgangsspannung auf einen Sollwert hin ermöglicht.

Bei einer vorteilhaften Ausgestaltung ist die Gleichrichteranordnung, insbesondere der Schalter zwischen der Halbbrücke der Gleichrichteranordnung und dem Verbindungsknoten derart getaktet betreibbar ist, dass die Ausgangsspannung der Gleichrichtanordnung auf ihren Sollwert hin regelbar ist,
und/oder dass
der Eingangsstrom am Spartransformator derart getaktet betreibbar ist, dass die Ausgangsspannung der Gleichrichtanordnung auf ihren Sollwert hin regelbar ist. Von Vorteil ist dabei, dass zwei Stellglieder vorgesehen sind, mit welchen wahlweise ein Beeinflussen der Ausgangsseite ermöglicht ist. Bei Verwendung beider Stellglieder ist ein besonders schnelles und effektives Hinregeln auf den gewünschten Sollwert ermöglicht.

Bei einer vorteilhaften Ausgestaltung ist zur Bildung eines Schwingkreises der Sekundärwicklung eine Anordnung von Kapazitäten zugeschaltet, wobei mindestens eine der Kapazitäten mit einem zugeordneten, steuerbaren Halbleiterschalter zuschaltbar oder wegschaltbar ist, insbesondere also für den Schwingkreis wirksam oder unwirksam machbar ist, insbesondere zum Abstimmen der Resonanzfrequenz des Schwingkreises auf eine Sollfrequenz, insbesondere auf eine Frequenz des in den Primärleiter eingeprägten Stromes. Von Vorteil ist dabei, dass auch während des Betriebs ein Abstimmen der Resonanzfrequenz des Schwingkreises auf die Frequenz des Primärleiterstroms ermöglicht ist. Somit sind Toleranzen oder Änderungen der Werte der Kapazität oder Induktivität des Schwingkreises ausgleichbar. Beispielsweise werden die Werte verändert durch Temperaturänderungen während des Betriebs oder andere Einflüsse, die im Betrieb der die Anordnung umfassenden Anlage auftreten. Ein Abstimmen ist somit beispielsweise auch in regelmäßigen zeitlichen Abständen sinnvoll. Der Abstimmvorgang ist beispielsweise einleitbar durch ein Startsignal einer übergeordneten Steuerung, wobei der Zeitpunkt des Startsignales derart gewählt ist, dass keine Störung des sonstigen Betriebes ausgelöst wird. Denn für die Zeitdauer des Abstimmens ist keine Energie an den Verbraucher zur Verfügung stellbar, weil der Schwingkreis in den unbelasteten Zustand gebracht wird.

Vorzugsweise ist die Zeitdauer für das Abstimmen derart klein gewählt, dass die vorhandenen Energiepuffer zur Versorgung des Verbrauchers in der Lage sind. Die Energiepuffer umfassen zumindest auch die Mittel zur Glättung der Ausgangsspannung des Gleichrichters.

Mittels der Erfindung ist also auch ein automatisches Abstimmen ausführbar, das von einer Steuerelektronik veranlasst und durchgeführt wird.

Bei einer vorteilhaften Ausgestaltung ist der Primärleiter mit einem mittelfrequenten Strom beaufschlagt, insbesondere der eine Frequenz zwischen 10 und 500 kHz aufweist. Von Vorteil ist dabei, dass ein hoher Wirkungsgrad erzielbar ist und mittels aufmodulierter Stromanteile, welche höher frequent sind, also in einem Frequenzband liegen, das beabstandet ist vom für den Primärleiterstrom verwendeten Frequenzband, eine Datenübertragung ohne zusätzliche Sende- und Empfangsmittel ermöglicht ist.

Bei einer vorteilhaften Ausgestaltung ist der Sekundärwicklung die Anordnung von Kapazitäten parallel oder in Reihe zugeschaltet. Von Vorteil ist dabei, dass die Erfindung in verschiedenen Ausführungsformen des Schwingkreises anwendbar ist.

Bei einer vorteilhaften Ausgestaltung ist die Anordnung von Kapazitäten als eine Parallelschaltung der Kapazitäten oder eine Reihenschaltung der Kapazitäten ausgeführt. Von Vorteil ist dabei, dass bei Zuschaltung aller Kapazitäten eine hohe oder niedrige Ersatz-Kapazität der Anordnung zusammenstellbar ist

Bei einer vorteilhaften Ausgestaltung ist der Schwingkreis ein Parallelschwingkreis oder ein Reihenschwingkreis. Von Vorteil ist dabei, dass verschieden große Spannungen bei den verschiedenen Ausführungen des Schwingkreises auftreten, jedoch in jeder Ausführungsform die Erfindung anwendbar ist, also ein Abstimmen des Schwingkreises auf die Primärleiterstromfrequenz zur Leistungsübertragung ermöglicht ist.

Bei einer vorteilhaften Ausgestaltung ist der Schwingkreis mit Sekundärwicklung und Kapazitäten derart dimensioniert und die Kapazitäten sind derart wirksam oder unwirksam gemacht, dass die zugehörige Resonanzfrequenz der wirksamen Komponenten des Schwingkreises im Wesentlichen der Mittelfrequenz des in den Primärleiter eingeprägten Stromes entspricht. Von Vorteil ist dabei, dass auch bei schwacher Kopplung ein hoher Wirkungsgrad bei der Energieübertragung erzielbar ist.

Bei einer vorteilhaften Ausgestaltung ist der elektrische Verbraucher zusammen mit dem Schwingkreis auf einem relativ zum Primärleiter bewegbar angeordneten Anlagenteil, insbesondere Fahrzeug, angeordnet,
insbesondere wobei der Verbraucher der elektrische Antrieb des Anlagenteils ist. Von Vorteil ist dabei, dass die Energie verschleißfrei an den bewegbar angeordneten Verbraucher übertragbar ist.

Bei einer vorteilhaften Ausgestaltung ist die dem steuerbaren Halbleiterschalter zugeordnete Kapazität diesem parallel oder in Reihe zugeschaltet. Von Vorteil ist dabei, dass die Kapazität zuschaltbar oder wegschaltbar ist, also wirksam oder unwirksam machbar ist.

Bei einer vorteilhaften Ausgestaltung ist die Anordnung der Kapazitäten eine Reihenschaltung oder eine Parallelschaltung der Kapazitäten. Von Vorteil ist dabei, dass bei der Reihenschaltung ein engerer Frequenzbereich fein abstimmbar ist im Vergleich zur Parallelschaltung und bei der Parallelschaltung ein weiterer Frequenzbereich im Vergleich zur Reihenschaltung abstimmbar ist

Bei einer vorteilhaften Ausgestaltung ist aus dem Schwingkreis die Eingangsseite eines Spartransformators versorgt, dessen Ausgangsseite einen Gleichrichter versorgt, aus dem über Mittel zur Glättung ein Verbraucher versorgbar ist. Von Vorteil ist dabei, dass die Ausgangsspannung regelbar ist, indem der Primärstrom des Spartransformators getaktet gesteuert wird und somit sekundärseitig der Spannungswert auf einen Sollwert hin regelbar ist.

Bei einer vorteilhaften Ausgestaltung ist der Eingangsseite des Spartransformators ein steuerbarer Schalter parallel oder in Reihe zugeschaltet, so dass mittels getakteter Ansteuerung dieses Schalters die Ausgangsspannung auf einen Sollwert hin regelbar ist, insbesondere wobei das Ansteuersignal, insbesondere dessen Frequenz und/oder Pulsweitenmodulationsverhältnis, Stellgröße eines Reglers ist, dem der erfasste Ausgangsspannungswert als Istwert zugeführt wird. Von Vorteil ist dabei, dass eine gewünschte Spannung zur Verfügung stellbar ist auch bei schwankender magnetischer Kopplung zwischen Sekundärwicklung und in der Anlage stationär verlegtem Primärleiter.

Wichtige Merkmale bei dem Verfahren zum Betreiben einer Anordnung sind, dass die Gleichrichteranordnung, insbesondere der Schalter zwischen der Halbbrücke der Gleichrichteranordnung und dem Verbindungsknoten derart getaktet betrieben wird, dass die Ausgangsspannung der Gleichrichtanordnung auf ihren Sollwert hin geregelt wird,
und/oder dass
der Eingangsstrom am Spartransformator derart getaktet betrieben wird, dass die Ausgangsspannung der Gleichrichtanordnung auf ihren Sollwert hin geregelt wird.

Von Vorteil ist dabei, dass ein sehr effektives und schnelles Hinregeln ausführbar ist.

Bei einer vorteilhaften Ausgestaltung wird in einem ersten Schritt die Ausgangsseite des Schwingkreises weggeschaltet, insbesondere indem bei Ausführung als Reihenschwingkreis die Ausgangsseite kurzgeschlossen wird und bei Ausführung als Parallelschwingkreis abgetrennt wird,
in einem zweiten Schritt die Phasendifferenz zwischen dem durch die Sekundärspule fließenden Strom und der an der Sekundärspule anliegenden Spannung bestimmt wird,
und in einem dritten Schritt die Ausgangsseite wieder zugeschaltet wird. Von Vorteil ist dabei, dass ein Abstimmen der Resonanzfrequenz automatisiert ausführbar ist.

Bei einer vorteilhaften Ausgestaltung werden der oder die Schalter derart angesteuert, dass mittels der zugehörigen Kapazität oder Kapazitäten die Resonanzgüte und/oder die Resonanzfrequenz des Schwingkreises verbessert oder auf einen Sollwert hin gesteuert wird, insbesondere in diskreter Weise. Von Vorteil ist dabei, dass

Bei einer vorteilhaften Ausgestaltung wird der der Eingangsseite des Spartransformators zugeschaltete Schalter derart getaktet betrieben und/oder das Taktsignal derart gestellt, dass die dem Verbraucher zur Verfügung gestellte Ausgangsspannung oder der dem Verbraucher zur Verfügung gestellte Ausgangsstrom auf einen Sollwert hin geregelt wird. Von Vorteil ist dabei, dass ein benötigter Strom bereit stellbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist eine erste erfindungsgemäße Anordnung schematisch dargestellt, wobei eine Reihenschaltung von steuerbaren Schaltern AC-S2 bis AC-S4 vorgesehen ist.

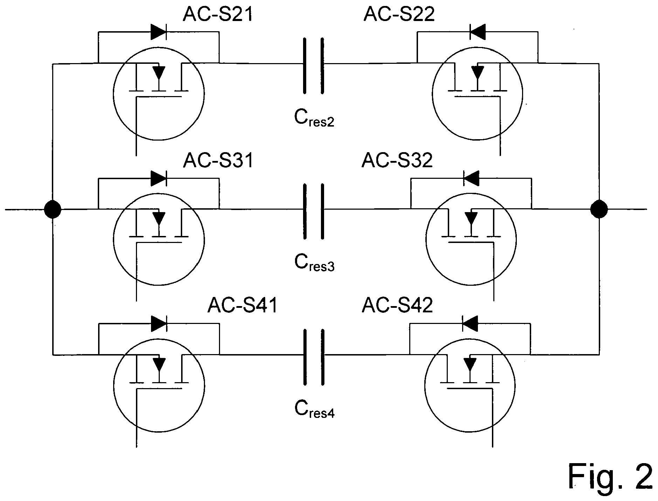

In Figur 2 ist ein alternatives erfindungsgemäßes Ausführungsbeispiel gezeigt, bei dem statt der Reihenschaltung eine Parallelschaltung verwendet ist.

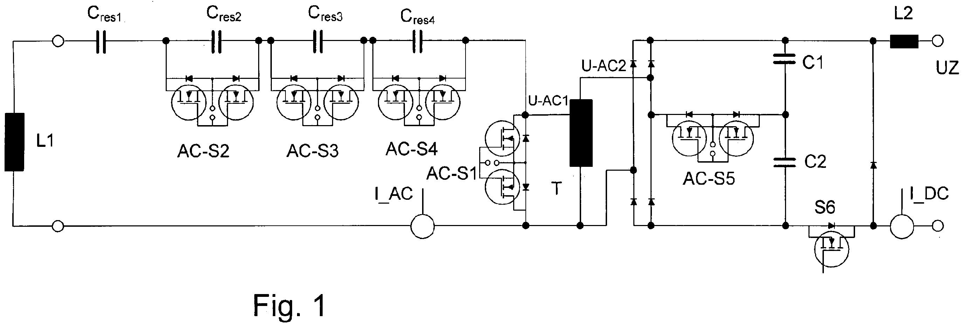

Wie in Figur 1 dargestellt, wird eine Sekundärwicklung L1 mit einer Kapazität C_res1 in Reihe geschaltet.

Innerhalb einer in Figur 1 nicht gezeigten Anlage ist als Primärleiter ein langgestreckter Linienleiter verlegt, der mit einem mittelfrequenten Wechselstrom beaufschlagt wird. Die Sekundärwicklung L1 ist induktiv an diesen Primärleiter gekoppelt vorgesehen und an einem entlang dem Primärleiter verfahrbaren Fahrzeug angeordnet. Vorzugsweise ist das Fahrzeug schienengeführt und der Primärleiter entlang der Schienen verlegt.

Der Kapazität C_res1 ist eine Reihenschaltung von weiteren Kapazitäten (C_res2, C_res2, C_res3) in Reihe zugeschaltet, wobei jeder dieser Kapazitäten (C_res2, C_res2, C_res3) ein jeweiliger steuerbarer Halbleiterschalter (AC-S2, AC-S3, AC-S4) parallel zugeschaltet, so dass durch Öffnen des jeweiligen Schalters die jeweils parallel geschaltete Kapazität wirksam wird und durch Schließen des Schalters unwirksam.

Auf diese Weise ist ein Feinabgleich des aus der Sekundärwicklung L1 und den Kapazitäten bestehenden Reihen-Schwingkreises ermöglicht. Hierbei ist C_res1 derart dimensioniert, dass mittels Zuschalten oder Kurzschließen der Kapazitäten ( C_res2, C_res2, C_res3 ) ein feines Anpassen der Resonanzfrequenz beziehungsweise auch der Resonanzgüte ermöglicht ist.

Statt der gezeigten drei Kapazitäten ( C_res2, C_res2, C_res3) mit den zugehörigen Schaltern sind auch eine größere Anzahl von solchen in Reihe geschalteten Kapazitäten mit wiederum zugehörigen Schaltern, die wiederum zur jeweils zugeordneten Kapazität parallel zuschaltbar sind, vorsehbar und somit ein noch feinerer Abgleich und/oder ein weiterer Anpassungsbereich ermöglicht. Mittels des jeweiligen Schalters ist die jeweils zugeordnete Kapazität durch Schließen dieses Schalters kurzschließbar und somit unwirksam machbar. Durch Öffnen dieses Schalters ist wiederum ein Wirksam-Machen der Kapazität erreichbar.

Die Ausgangsspannung U_AC1 des Reihenschwingkreises wird einem Spartransformator T zugeführt, wobei jedoch ein steuerbarer Halbleiterschalter AC-S5 zum Kurzschließen dieses Ausgangs des Reihenschwingkreises ebenfalls vorgesehen ist.

Vorzugsweise gleicht die Induktivität der Unterspannungsseite des Spartransformators im Wesentlichen der Induktivität der Sekundärwicklung L1 des Reihenschwingkreises.

Zum automatischen Abgleich des Schwingkreises ist in Figur 1 wird nämlich zunächst der Schalter AC-S1 kurzgeschlossen, so dass aus der Sekundärwicklung L1 und der Reihenschaltung der Kapazitäten ein unbelasteter Parallelschwingkreis gebildet ist. Schon beim Aufschwingen der ersten Schwingungsperiode ist anhand der Hochlaufkurve, also dem zeitlichen Verlauf von Strom I_AC und an der Sekundärwicklung anliegender Spannung, ein Bestimmen der Phasenlage und Resonanzgüte des Schwingkreises ausführbar. Dabei ist die Phasendifferenz der an der Sekundärwicklung L1 auftretenden Spannung zum erfassten Strom I_AC bestimmbar, insbesondere ohne Beeinflussung durch eine aus dem Schwingkreis zu versorgende Last. Mittels Hinzuschalten oder Wegschalten der Kapazitäten (C_res2, C_res2, C_res3) ist ein Hinregeln auf die gewünschte Resonanzgüte und Phasenverschiebung ausführbar, also ein automatisches Abstimmen des Schwingkreises.

Mittels Betätigung der Schalter AC-S2, AC-S3, AC-S4) wird dabei der Feinabgleich ausgeführt, so dass die Phasenlage und gegebenenfalls auch die Resonanzgüte möglichst nahe an ihren optimalen Sollwert geführt wird und somit der unbelastete Schwingkreis möglichst gut abgeglichen ist auf die Resonanzfrequenz.

Der Reihenschwingkreis speist eine spannungserhöhende Schaltungsanordnung, die hier beispielshaft einen Hochsetzsteller, wobei die diesem zugeführte Energie über den Schalter AC-S1 gesteuert zuführbar ist, mit einer Spannungsdopplerschaltung aufweist, die den Schalter AC-S5 umfasst.

Bei geöffnetem Schalter AC-S1 wird Energiefluss an die Unterspannungsseite des Spartransformators T geführt, dessen Ausgangsstrom einem einphasigen BrückenGleichrichter zugeführt wird. Zwischen einem Brückenpunkt des Gleichrichters und einem Brückenpunkt einer Reihenschaltung von zwei Kapazitäten C1 und C2 ist ein weiterer steuerbarer Schalter AC-S1 vorgesehen, so dass der AC-S1 Spannungswert der gleichgerichteten Spannung vom Schaltzustand des Schalters AC-S1 abhängt. Dabei ist die Reihenschaltung von zwei Kapazitäten C1 und C2 aus der Ausgangsseite des einphasigen Brücken-Gleichrichters versorgt.

Aus der gleichgerichteten Spannung ist ein Verbraucher versorgbar, wobei ein Schalter S6 zum Zuschalten beziehungsweise Abschalten des für den Verbraucher bereit gestellten Stromes I_DC vorgesehen ist. Der an den Verbraucher geführte Strom I_DC wird über eine Induktivität L2 geführt und somit weiter geglättet. Dieser Strom I_DC wird erfasst und ist als Eingangswert, insbesondere Istwert, eines Reglers verwendbar.

Die gleichgerichtete und geglättete Ausgangsspannung UZ wird ebenfalls erfasst und ist ebenso als Eingangswert, insbesondere Istwert, eines Reglers verwendbar.

Mittels des getakteten Betriebs des Schalters AC-S1 ist ein Aufwärtswandlerbetrieb ausführbar, so dass an der Ausgangsseite des Spartransformators eine höhere Spannung zur Verfügung steht als an der Eingangsseite, also der mittels des Schalters AC-S1 kurzschließbaren Seite. Somit ist als Stellgröße des Reglers die Taktperiode des getakteten Signals, oder beispielsweise das Pulsweitenverhältnis eines pulsweitenmodulierten Signals zur Ansteuerung des Schalters AC-S1 verwendbar.

Da die Schalter als steuerbare Halbleiterschalter ausgeführt sind, ist ein einfaches und schnelles Schalten mittels einer Ansteuerelektronik ermöglicht.

Insbesondere bei schwacher induktiver Kopplung zwischen Primärleiter und Sekundärwicklung und/oder abgesenktem Primärleiterstrom ist mittels des gekatteten Betriebs eine ausreichend hohe Zwischenkreisspannung, also gleichgerichtete Spannung Uz, herstellbar.

In einem weiteren erfindungsgemäßen Ausführungsbeispiel werden die Schalter (AC-S2, AC-S3, AC-S4) getaktet betrieben, insbesondere bei einem geeignet gewählten Phasenwinkel betätigt. Auf diese Weise sind abhängig vom Phasenwinkel verschiedene Zwischenwerte von effektiv wirksamen Kapazitäten im Schwingkreis wirksam machbar. Mittels einer geeigneten Regelung ist sogar während des belasteten Betriebes des Schwingkreises ein Optimieren der induktiv übertragenen Leistung ausführbar.

Die Erfindung ermöglicht wegen der Verwendung des Spartransformators im Aufwärtswandlerbetrieb den Einsatz eines Reihenschwingkreises, wobei die in der Sekundärinduktivität L1 auftretenden Wicklungsspannungen klein haltbar sind. Denn trotz der kleinen Wickiungsspannungen und somit der erhöhten Sicherheit für die Sekundärinduktivität und trotz der gegebenenfalls schwachen induktiven Kopplung der Sekundärinduktivität an den Primärleiter ist eine ausreichend hohe Spannung dem Verbraucher zur Verfügung stellbar, weil der Spartransformator im Aufwärtswandlerbetrieb betreibbar ist und außerdem mittels des Schalters AC-S5 eine Spannungsverdopplung erreichbar ist. Dabei ist mittels des Schalters AC-S5 ein Umschalten von der Spitzenwert-Gleichrichtung des einphasigen Brückengleichrichters zur Spitzen-Spitzenwert-Gleichrichtung ermöglicht. Bei der Spitzenwert-Gleichrichtung gleicht die gleichgerichtete Spannung der maximalen Amplitude des Wechselstroms an der Eingangsseite des Gleichrichters, wenn die Ausgangsseite des Gleichrichters unbelastet ist. Bei der Spitzen-Spitzenwert-Gleichrichtung gleicht die gleichgerichtete Spannung des Doppelten der maximalen Amplitude des Wechselstroms an der Eingangsseite des Gleichrichters, wenn die Ausgangsseite des Gleichrichters unbelastet ist.

Somit ist also ein Einsatz von Sekundärinduktivitäten mit niedriger Leerlaufspannung ermöglicht. Insbesondere weist die Sekundärinduktivität also eine niedrige Windungszahl auf. Auf diese Weise wird auch die induktive Rückwirkung des Sekundärteils auf den Primärleiters verringerbar.

### Bezugszeichenliste

- L1: Sekundärwicklung
- L2: Induktivität
- C1: Kapazität
- C2: Kapazität
- T: Spartrafo, Spartransformator

- AC-S1: steuerbarer Halbleiterschalter
- AC-S2: steuerbarer Halbleiterschalter
- AC-S3: steuerbarer Halbleiterschalter
- AC-S4: steuerbarer Halbleiterschalter
- AC-S5: steuerbarer Halbleiterschalter
- S6: steuerbarer Halbleiterschalter

- C_res1: Kapazität
- C_res2: Kapazität
- C_res3: Kapazität
- C_res4: Kapazität
- C_res5: Kapazität

- I_AC: Strom im Resonanzschwingkreis
- I_DC: unipolarer Ausgangsstrom

- UZ: unipolare Zwischenkreisspannung

## Patentansprüche

1. Anordnung zur induktiven Energieübertragung an einen elektrischen Verbraucher,
wobei eine Sekundärwicklung (L1) induktiv gekoppelt ist mit einem Primärleiter,
wobei zur Bildung eines Schwingkreises der Sekundärwicklung (L1) eine Anordnung von Kapazitäten (C_res2, C_res3, C_res4) zugeschaltet ist,
wobei aus dem Schwingkreis eine aus einem Spartransformator (T) und einem steuerbaren Schalter (AC-S1) bestehenden Hochsetzstelleranordnung mit Gleichrichteranordnung versorgt ist, deren Ausgangsspannung einen Verbraucher speist,
wobei
- entweder die Anordnung von Kapazitäten (C_res2, C_res3, C_res4) als eine Reihenschaltung der Kapazitäten (C_res2, C_res3, C_res4) ausgeführt ist, wobei die Kapazitäten (C_res2, C_res3, C_res4) mit einem jeweils zugeordneten, steuerbaren Halbleiterschalter (AC-S2, AC-S3, AC-S4) kurzschließbar sind, wobei der Eingangsseite des Spartransformators (T) ein steuerbarer Schalter (AC-S1) parallel zugeschaltet ist,
- oder die Anordnung von Kapazitäten (C_res2, C_res3, C_res4) als eine Parallelschaltung der Kapazitäten (C_res2, C_res3, C_res4) ausgeführt ist, wobei die Kapazitäten (C_res2, C_res3, C_res4) mit einem jeweils zugeordneten, in Reihe geschalteten, steuerbaren Halbleiterschalter (AC-S21, AC-S22, AC-S31, AC-S32, AC-S41, AC-S42) abtrennbar sind, wobei der Eingangsseite des Spartransformators (T) ein steuerbarer Schalter (AC-S1) in Reihe zugeschaltet ist.

2. Anordnung nach Anspruch 1,
**dadurch gekennzeichnet, dass**
der Sekundärseite des Spartransformators (T) eine Gleichrichteranordnung zugeschaltet ist, aus dem über Mittel zur Glättung (C1, C2) ein Verbraucher versorgbar ist.

3. Anordnung nach mindestens einem der vorangegangenen Ansprüche,
**dadurch gekennzeichnet, dass**
der Eingangsseite des Spartransformators (T) der steuerbare Schalter (AC-S1) parallel oder in Reihe zugeschaltet ist, so dass mittels getakteter Ansteuerung dieses Schalters (AC-S1) die Ausgangsspannung auf einen Sollwert hin regelbar ist, insbesondere wobei das Ansteuersignal, insbesondere dessen Frequenz und/oder Pulsweitenmodulationsverhältnis, Stellgröße eines Reglers ist, dem der erfasste Ausgangsspannungswert als Istwert zugeführt wird.

4. Anordnung nach Anspruch 2,
**dadurch gekennzeichnet, dass**
die Gleichrichteranordnung zwischen einer Spitzenwertgleichrichtung und einer Spitze-Spitzenwertgleichrichtung umschaltbar ist, insbesondere also eine Spannungsdopplerschaltung aufweist.

5. Anordnung nach Anspruch 2,
**dadurch gekennzeichnet, dass**
die Gleichrichteranordnung einen Halbbrückengleichrichter aufweist.

6. Anordnung nach Anspruch 5,
**dadurch gekennzeichnet, dass**
der Gleichrichteranordnung ausgangsseitig eine Reihenschaltung von Kapazitäten (C1, C2) zugeschaltet sind, insbesondere parallel zugeschaltet sind, wobei ein Schalter (AC-S5) derart zwischen einer Halbbrücke der Gleichrichteranordnung und einem Verbindungsknoten zwischen den Kapazitäten (C1, C2) angeordnet ist, dass eine Beeinflussung der Ausgangsspannung mittels der Schalterstellung dieses Schalters erreichbar ist.

7. Anordnung nach Anspruch 6,
**dadurch gekennzeichnet, dass**
die Gleichrichteranordnung, insbesondere der Schalter (AC-S5) zwischen der Halbbrücke der Gleichrichteranordnung und dem Verbindungsknoten derart getaktet betreibbar ist, dass die Ausgangsspannung der Gleichrichtanordnung auf ihren Sollwert hin regelbar ist,
und/oder dass
der Eingangsstrom am Spartransformator (T) durch den steuerbaren Schalter (AC-S1) derart getaktet betreibbar ist, dass die Ausgangsspannung der Gleichrichtanordnung auf ihren Sollwert hin regelbar ist.

8. Anordnung nach mindestens einem der vorangegangenen Ansprüche,
**dadurch gekennzeichnet, dass**
mindestens eine der Kapazitäten (C_res2, C_res3, C_res4) mit einem zugeordneten, steuerbaren Halbleiterschalter zuschaltbar oder wegschaltbar ist, insbesondere also für den Schwingkreis wirksam oder unwirksam machbar ist,
insbesondere zum Abstimmen der Resonanzfrequenz des Schwingkreises auf eine Sollfrequenz, insbesondere auf eine Frequenz des in den Primärleiter eingeprägten Stromes.

9. Anordnung nach mindestens einem der vorangegangenen Ansprüche,
**dadurch gekennzeichnet, dass**
der Schwingkreis ein Parallelschwingkreis oder ein Reihenschwingkreis ist.

## Claims

1. Arrangement for inductive energy transmission to an electrical load,
wherein a secondary winding (L1) is inductively coupled to a primary conductor,
wherein to form a resonant circuit an arrangement of capacitors (C_res2, C_res3, C_res4) is connected to the secondary winding (L1),
wherein a boost converter arrangement with rectifier arrangement, consisting of an autotransformer (T) and a controllable switch (AC-S1), is supplied from the resonant circuit, the output voltage of which arrangement supplies a load,
wherein
- either the arrangement of capacitors (C_res2, C_res3, C_res4) is configured as a series connection of the capacitors (C_res2, C_res3, C_res4), wherein the capacitors (C_res2, C_res3, C_res4) are short-circuitable with a respectively assigned, controllable semiconductor switch (AC-S2, AC-S3, AC-S4), wherein a controllable switch (AC-S1) is connected in parallel with the input side of the autotransformer (T),
- or the arrangement of capacitors (C_res2, C_res3, C_res4) is configured as a parallel connection of the capacitors (C_res2, C_res3, C_res4), wherein the capacitors (C_res2, C_res3, C_res4) are isolatable with a respectively assigned, series-connected, controllable semiconductor switch (AC-S21, AC-S22, AC-S31, AC-S32, AC-S41, AC-S42), wherein a controllable switch (AC-S1) is connected in series with the input side of the autotransformer (T).

2. Arrangement according to claim 1,
**characterised in that**
a rectifier arrangement is connected to the secondary side of the autotransformer (T), from which a load is suppliable via means for smoothing (C1, C2).

3. Arrangement according to at least one of the preceding claims,
**characterised in that**
the controllable switch (AC-S1) is connected in parallel or in series with the input side of the autotransformer (T), so that by means of clocked control of this switch (AC-S1) the output voltage is regulatable to a target value, in particular wherein the control signal, in particular its frequency and/or pulse width modulation ratio, is control variable of a regulator, to which the detected output voltage value is supplied as instantaneous value.

4. Arrangement according to claim 2,
**characterised in that**
the rectifier arrangement is switchable between a peak value rectification and a peak-to-peak value rectification, in particular therefore has a voltage doubler circuit.

5. Arrangement according to claim 2,
**characterised in that**
the rectifier arrangement has a half-bridge rectifier.

6. Arrangement according to claim 5,
**characterised in that**
on the output side a series connection of capacitors (C1, C2) are connected to the rectifier arrangement, in particular are connected in parallel, wherein a switch (AC-S5) is arranged in such a manner between a half-bridge of the rectifier arrangement and a connection node between the capacitors (C1, C2) that an influencing of the output voltage is achievable by means of the switch position of this switch.

7. Arrangement according to claim 6,
**characterised in that**
the rectifier arrangement, in particular the switch (AC-S5) between the half-bridge of the rectifier arrangement and the connection node, is operable in such a clocked manner that the output voltage of the rectifier arrangement is regulatable to its target value,
and/or **in that**
the input current at the autotransformer (T) is operable by the controllable switch (AC-S1) in such a clocked manner that the output voltage of the rectifier arrangement is regulatable to its target value.

8. Arrangement according to at least one of the preceding claims,
**characterised in that**
at least one of the capacitors (C_res2, C_res3, C_res4) is connectable to or disconnectable from an assigned, controllable semiconductor switch, in particular therefore can be made effective or ineffective for the resonant circuit,
in particular for tuning the resonant frequency of the resonant circuit to a target frequency, in particular to a frequency of the current applied to the primary conductor.

9. Arrangement according to at least one of the preceding claims,
**characterised in that**
the resonant circuit is a parallel resonant circuit or a series resonant circuit.

## Revendications

1. Dispositif de transmission d'énergie par induction à un consommateur électrique, dans lequel un enroulement secondaire (L1) est couplé par induction à un conducteur primaire, un ensemble de condensateurs (C_res2, C_res3, C_res4) étant connecté à l'enroulement secondaire (L1) pour former un circuit oscillant,
lequel circuit oscillant alimente un dispositif convertisseur élévateur avec dispositif redresseur et constitué d'un autotransformateur (T) et d'un commutateur commandable (AC-S1), dont la tension de sortie alimente un consommateur,
dans lequel
- soit l'ensemble de condensateurs (C_res2, C_res3, C_res4) est réalisé sous la forme d'un couplage en série des condensateurs (C_res2, C_res3, C_res4), les condensateurs (C_res2, C_res3, C_res4) pouvant être court-circuités par un commutateur à semi-conducteurs commandable (AC-S2, AC-S3, AC-S4) respectivement associé, un commutateur commandable (AC-S1) étant connecté en parallèle avec le côté entrée de l'autotransformateur (T),
- soit l'ensemble de condensateurs (C_res2, C_res3, C_res4) est réalisé sous la forme d'un couplage en parallèle des condensateurs (C_res2, C_res3, C_res4), les condensateurs (C_res2, C_res3, C_res4) pouvant être séparés par un commutateur à semi-conducteurs commandable (AC-S21, AC_S22, AC-S31, AC_S32, AC-S41, AC_S42) couplé en série respectivement associé, un commutateur commandable (AC-S1) étant connecté en série avec le côté entrée de l'autotransformateur (T)

2. Dispositif selon la revendication 1,
**caractérisé en ce**
**qu'**au côté secondaire de l'autotransformateur (T) est connecté un dispositif redresseur à partir duquel, par l'intermédiaire de moyens de lissage (C1, C2), un consommateur peut être alimenté.

3. Dispositif selon au moins l'une des revendications précédentes,
**caractérisé en ce**
**que** le commutateur commandable (AC-S1) est connecté en parallèle ou en série au côté entrée de l'autotransformateur (T), de sorte que, par commande cadencée de ce commutateur (AC-S1), la tension de sortie est réglable à une valeur de consigne, en particulier le signal de commande, en particulier sa fréquence et/ou son rapport de modulation de largeur d'impulsions, étant la grandeur réglante d'un régulateur auquel la valeur de tension de sortie détectée est amenée en tant que valeur réelle.

4. Dispositif selon la revendication 2,
**caractérisé en ce**
**que** le dispositif redresseur est commutable entre un redressement de valeur de crête et un redressement de valeur crête-crête, donc en particulier présente un circuit doubleur de tension.

5. Dispositif selon la revendication 2,
**caractérisé en ce**
**que** le dispositif redresseur présente un redresseur en demi-pont.

6. Dispositif selon la revendication 5,
**caractérisé en ce**
**qu'**un couplage en série de condensateurs (C1, C2) est connecté, en particulier connecté en parallèle, au dispositif redresseur côté sortie, un commutateur (AC-S5) étant disposé entre un demi-pont du dispositif redresseur et un noeud de connexion entre les condensateurs (C1, C2) de telle manière que la position de commutation de ce commutateur permette d'exercer une influence sur la tension de sortie.

7. Dispositif selon la revendication 6,
**caractérisé en ce**
**qu'**il est possible de commander le dispositif redresseur, en particulier le commutateur (AC-S5) entre le demi-pont du dispositif redresseur et le noeud de connexion, de façon cadencée, de telle manière que la tension de sortie du dispositif redresseur soit réglable à sa valeur de consigne,
et/ou
**qu'**il est possible de commander le courant d'entrée à l'autotransformateur (T) par le commutateur commandable (AC-S1) de façon cadencée, de telle manière que la tension de sortie du dispositif redresseur soit réglable à sa valeur de consigne.

8. Dispositif selon au moins l'une des revendications précédentes,
**caractérisé en ce**
**qu'**au moins un des condensateurs (C_res2, C_res3, C_res4) peut être connecté ou déconnecté au moyen d'un commutateur à semi-conducteurs commandable associé, donc en particulier rendu actif ou inactif pour le circuit oscillant,
en particulier pour accorder la fréquence de résonance du circuit oscillant à une fréquence de consigne, en particulier à une fréquence du courant appliqué dans le conducteur primaire.

9. Dispositif selon au moins l'une des revendications précédentes,
**caractérisé en ce**
**que** le circuit oscillant est un circuit oscillant parallèle ou un circuit oscillant série.
